(19) Europäisches Patentamt
European Patent Office
Office européen des brevets

(11) Veröffentlichungsnummer: **0 078 252**
**B1**

# (12) EUROPÄISCHE PATENTSCHRIFT

(45) Veröffentlichungstag der Patentschrift: **09.12.87**

(51) Int. Cl.⁴: **B 23 K 9/00**, B 23 K 9/06, B 23 K 9/10

(21) Anmeldenummer: **82890153.8**

(22) Anmeldetag: **25.10.82**

(54) **Elektronisches Schweissgerät.**

(30) Priorität: **27.10.81 AT 4565/81**
**14.06.82 AT 2295/82**
**30.09.82 AT 3622/82**
**21.10.82 AT 3867/82**

(43) Veröffentlichungstag der Anmeldung:
**04.05.83 Patentblatt 83/18**

(45) Bekanntmachung des Hinweises auf die Patenterteilung:
**09.12.87 Patentblatt 87/50**

(84) Benannte Vertragsstaaten:
**BE CH DE FR GB IT LI LU NL SE**

(56) Entgegenhaltungen:
**CH - A - 623 252**
**DE - A - 2 435 023**
**DE - A - 2 908 274**
**DE - A - 2 913 627**
**DE - A - 2 914 535**
**DE - A - 2 932 931**
**US - A - 4 254 466**

(73) Patentinhaber: **FRONIUS SCHWEISSMASCHINEN KG AUSTRIA, A-4643 Pettenbach (AT)**

(72) Erfinder: **Fronius, Klaus, A-4643 Pettenbach 89 (AT)**

(74) Vertreter: **Köhler-Pavlik, Johann, Dipl.-Ing., Margaretenplatz 5, A-1050 Wien (AT)**

**EP 0 078 252 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein elektronisches Schweissgerät mit einem primärseitig geregelten Schaltnetzgerät, bei dem an einen Netzgleichrichter ein in Abhängigkeit von dem Lichtbogenstrom und/oder von der Lichtbogenspannung über einen Analogregler gesteuerten Wechselrichter in Form einer Halbleiter-Schaltstufe angeschlossen ist, deren Ausgang über einen Transformator mit einem Schweissgleichrichter verbunden ist, mit zwei elektrischen Messwertaufnehmern für die Lichtbogenspannung und den Lichtbogenstrom, wobei der Sollwerteingang des Analogreglers mit dem Ausgang einer zur Sollwerteinstellung der einen Lichtbogen-Kenngrösse oder der beiden Lichtbogen-Kenngrössen und zur Schweissüberwachung vorgesehenen Mikroprozessorsteuerung verbunden ist und der Analogregler einen Soll-Istwertvergleich ausführt um in Abhängigkeit davon ein Fehlersignal zu erzeugen, welches einem Pulsbreitenmodulator der Halbleiter-Schaltstufe zugeführt wird, die Transistoren als Schalter enthält und als Eintakt-Durchflusswandler mit asymmetrischer Halbbrückenschaltung oder als Gegentakt-Vollbrücke ausgebildet ist.

Es sind bereits elektrische Schweissgeräte bekannt, welche gesteuerte Gleichrichter (Thyristoren) aufweisen. Bei dieser und ähnlichen Arten von Schweissgeräten ist jedoch der voluminöse und schwergewichtige Netztransformator unumgänglich.

Anderseits sind vor allem aus der Labortechnik sowie aus der Unterhaltungselektronik elektronisch geregelte Netzgeräte für kleinere und mittlere Leistungen bekannt, welche als sogenannte Schaltnetzgeräte ausgebildet sind. Die Netzspannung wird hiebei zuerst gleichgerichtet, dann mit einer hohen Schaltfrequenz (meist über 20 KHz) «zerhackt», auf die gewünschte Spannung über einen Transformator transformiert, und anschliessend wieder gleichgerichtet. Durch die Wahl der hohen Schaltfrequenz kann einerseits der Wirkungsgrad erhöht und anderseits das Volumen und Gewicht des Transformators wesentlich verringert werden. Man unterscheidet primär- oder sekundärseitig geregelte Schaltnetzgeräte, wobei die Regelung entweder durch eine Veränderung der Taktzeit bei konstanter Frequenz oder durch Änderung der Frequenz bei konstanter Arbeitsimpulsdauer erfolgt. Als Schalter werden zumeist schnelle Leistungstransistoren für höhere Betriebsspannungen verwendet.

Das Einsatzgebiet für Schaltnetzgeräte erstreckte sich bisher auf Fernsehgeräte, NF-Leistungsverstärker, Messgeräte, Film- und Diaprojektoren, Buchungs-, Rechen- und Schreibmaschinen, Computer, Spannungs- und Stromkonstantgeräte für Industrie und Labor, Stromversorgungen für Leuchtstofflampen, HF- und NF-Generatoren, Motorregelung, Akku-Ladegeräte, Wechselstrom/Wechselstrom-Umsetzer und Niederspannungsgeräte mit galvanischer Trennung vom Netz. Je nach Leistung (1 bis 3000 W und darüber) werden mit zunehmender Leistung folgende Wandlerarten gewählt: Eintakt-Sperrwandler, Eintakt-Durchflusswandler, Gegentakt-Halbbrücke, Gegentakt-Vollbrücke, und Gegentakt-Parallelspeisung.

Durch die DE-A-2 914 535 ist ein Gleichstrom-Lichtbogenschweissgerät bekannt, welches die wesentlichen Merkmale eines Schaltnetzgerätes aufweist, aber mit einer relativ geringen Schaltfrequenz von 0,1 bis 10 KHz arbeitet. Als Schalter werden Thyristoren verwendet. Zur Stromunterbrechung ist ein Schwingkreis vorgesehen, der aus zwei Kondensatoren und der Primärwicklung des Schalttransformators gebildet ist.

Durch die geringe Schaltfrequenz muss der Schalttransformator sowie die Siebglieder relativ gross dimensioniert werden, so dass das Gerät voluminös und schwer ist. Ausserdem treten unangenehme Störgeräusche im Hörbereich auf.

Die DE-A-2 913 627 zeigt ein Gleich- und/oder Wechselstrom-Lichtbogenschweissgerät, bei dem das Prinzip eines Schaltnetzgerätes angewendet wird. Als Netzgleichrichter sind Thyristoren vorgesehen, die von einer Phasenanschnittsteuerung ansteuerbar sind. Der Wechselrichter besteht ebenfalls aus Thyristoren und einem Kommutierungskondensator. Die Regelung erfolgt auf der Sekundärseite des Transformators mittels eines Transduktors.

Auch die CH-A-623 252 zeigt ein Lichtbogenschweissgerät mit den wesentlichen Merkmalen eines Schaltnetzgeräts. Der Wechselrichter besteht hiebei aus drei Thyristoren und einem Kommutierungskondensator zur Regelung des Schweissstroms bzw. der Schweissspannung wird die Frequenz der Steuersignale für den Wechselrichter verändert.

Insbesondere bei Schaltnetzgeräten höherer Leistung ergibt sich das Problem, dass infolge von netzseitigen Überspannungen oder durch ausgangsseitige Kurzschlüsse die zulässigen Grenzwerte Umax, Jmax der verwendeten Transistoren überschritten werden können, so dass eine Zerstörung der Transistoren resultiert. Es sind daher aufwendige Sicherungs- und Funktionsablaufschaltungen erforderlich, z.B. Überspannungs-, Spitzenstrom-, Überlast-, Kurzschluss-Absicherungen, Einschalt- und Wideranlaufmassnahmen und ähnliches, welche bei Schaltnetzgeräten kleinerer Leistung meist nicht erforderlich sind, da dort die Transistoren von vornherein überdimensioniert ausgewählt werden können, um eine gewisse Sicherheit zu bieten. Es bestand daher ein Vorurteil zur Konstruktion von Schaltnetzgeräten höherer Leistung, die z.B. bei elektrischen Schweissgeräten erforderlich ist (grösser als 10 000 W).

Aufgabe der Erfindung ist es, dieses Vorurteil zu beseitigen und ein neues elektronisches Schweissgerät unter Verwendung eines Schaltnetzgerätes zu schaffen, so dass das Gewicht und Volumen des Schweissgerätes reduziert und dessen Wirkungsgrad erhöht werden kann, wobei der Sättigungszustand der Transistoren überwacht, der Kollektorstrom begrenzt und die Stromanstiegsgeschwindigkeit im Kurzschlussfall begrenzt werden soll.

Gemäss einer Ausführungsform der Erfindung ist vorgesehen, dass zur Überwachung der Sättigungsspannung der Transistoren erste Komparatoren vorgesehen sind, dass zur Begrenzung des Kollektorstromes der Transistoren zweite Komparatoren vorgesehen sind, wobei die Ausgänge der ersten und der zweiten Komparatoren dem Setz-Eingang zweier Kippglieder zugeführt sind, deren Ausgänge gegebenenfalls über Verstärker den Treiberstufen der Transistoren zugeführt sind, um diese beim Auftreten einer zu hohen Sättigungsspannung oder eines zu hohen Kollektorstromes abzuschalten, und dass zur Begrenzung der Stromanstiegsgeschwindigkeit der Kollektorströme der Transistoren im Sekundärkreis des Transformators ein zusätzlicher Übertrager vorgesehen ist, dessen Primär- und Sekundärwicklung in Serie liegend, gegensinnig gewickelt sind, so dass durch die Gegenspannung der Sekundärwicklung der Stromanstieg in Abhängigkeit von der Last und damit vom Schweissstrom begrenzt wird, wobei vorzugsweise jeweils der Ausgang eines der Kippglieder gegebenenfalls über Verstärker mit dem Setz-Eingang des anderen Kippgliedes verbunden ist, so dass beim Setzen eines Kippgliedes gleichzeitig auch das andere Kippglied gesetzt wird.

Weitere Merkmale und Einzelheiten der Erfindung werden nachfolgend anhand der Figuren beschrieben, in welchen

Fig. 1 das Blockschaltbild eines bevorzugten Ausführungsbeispiels des erfindungsgemässen Schweissgeräts mit Schaltnetzgerät zeigt,

Fig. 2 den Wandlerteil des Schaltnetzgerätes als Eintakt-Durchflusswandler mit asymmetrischer Halbbrückenschaltung zeigt,

Fig. 3 den Wandlerteil des Schaltnetzgerätes als Gegentakt-Vollbrücke zeigt,

Fig. 4 ein Blockschaltbild eines erfindungsgemässen Schweissgerätes nach Fig. 1 und 3 mit einer zusätzlichen erfindungsgemässen Schutzschaltung zeigt und

Fig. 5a bis 5c Strom-Zeitdiagramme zur Erläuterung der Schutzschaltung nach Fig. 4 zeigen.

Die in den Figuren dargestellten gleichen Bauteile sind jeweils mit gleichen Bezugszeichen versehen.

In Fig. 1 bezeichnet 1 den Netzanschluss (z.B. 3 × 380 V Drehstrom, oder 220 V Lichtstrom), und 2 einen Netzgleichrichter, welcher auch ein Netzfilter (nicht dargestellt) enthalten kann. An den Gleichrichter 2 ist der Wandler oder die Schaltstufe 3 des Schaltnetzgerätes angeschlossen, wobei die gleichgerichtete Spannung durch Siebmittel, z.B. Kondensatoren (nicht dargestellt), geglättet werden kann.

Die Schaltstufe 3 enthält Schalttransistoren (bipolare Leistungstransistoren, Feldeffekt-Leistungstransistoren) oder ein- und ausschaltbare Thyristoren, welche von einem Pulsbreitenmodulator über Treiberstufen angesteuert werden, wie später anhand der Fig. 2 und 3 erläutert wird.

Die Schalttransistoren der Schaltstufe 3 zerhakken die vom Gleichrichter 2 gelieferte Gleichspannung, und der zerhackte Gleichstrom wird durch die Primärwicklung eines Transformators 4 geschickt. An der Sekundärwicklung des Transformators 4 ist ein Sekundärgleichrichter 5 angeschlossen, welcher den gewünschten Schweissstrom, bzw. Schweissspannung abgibt, wobei gegebenenfalls eine Siebdrossel (nicht dargestellt) vorgesehen ist. Der Pulsbreitenmodulator in der Schaltstufe 3 wird durch ein Fehlersignal von einem Analogregler 6 angesteuert, welchem die Soll- und Istwerte des Schweissstroms und der Schweissspannung zugeführt werden. Zu diesem Zwecke ist am Ausgang des Gleichrichters 5 ein Strom/Spannungswandler (z.B. ein Hallwandler) 7 für die Erfassung des Istwertes des Schweissstroms vorgesehen, während der Istwert der Schweissspannung direkt abgegriffen wird. Eine vom Strom/Spannungswandler 7 ausgehende Klemme 8 sowie eine vom Sekundärgleichrichter 5 ausgehende Klemme 9 dienen zum Anschluss des Schweisskabels, wobei die Klemme 9 mit Masse verbunden ist. In diesem Ausführungsbeispiel ist eine Mikroprozessorsteuerung 10 vorgesehen, welche eine Mehrzahl von Steuer- und Regelaufgaben erfüllt. Über eine Eingabetastatur 11 können die Sollwerte des Schweissstroms oder der Schweissspannung in einen Speicher der Mikroprozessorsteuerung 10 eingegeben werden, welche dann ausgelesen und über einen Digital/Analogwandler 12 dem Analogregler 6 zugeführt werden. Eine vorzugsweise alphanumerische Anzeige 13 zeigt die eingegebenen Sollwerte an. Über die Differenz zwischen Ist- und Sollwert gibt der Analogregler ein Fehlersignal an den Pulsbreitenmodulator ab und regelt die Schaltstufe 3 so aus, dass ein im wesentlichen konstanter Schweissstrom oder wahlweise eine konstante Schweissspannung am Ausgang des Schaltnetzgerätes auftritt. Der Aufbau des Analogreglers 6 ist dem Fachmann geläufig, so dass darauf nicht näher eingegangen wird.

Des weiteren ist vorgesehen, dass die Werte des Schweissstroms und der Schweissspannung der Mikroprozessorsteuerung über Analog/Digitalwandler 14 und 15 zugeführt werden, um über die Produktbildung von Strom und Spannung einen Leistungswert zu errechnen, welcher als Istwert dem Analogregler 6 zugeführt wird. Diese Art von Istwert als Funktion der Leistung ist für manche Schweissverfahren von Vorteil. Zum Zwecke der galvanischen Trennung ist ein Optokoppler 16 zwischen der Mikroprozessorsteuerung 10 und dem Analog/Digitalwandler 15 vorgesehen.

Der Mikroprozessorsteuerung 10 werden auch die Signale zweier Druckaufnehmer 17 und 18 zugeführt, welche in der Leitung für das Schutzgas bzw. im Wasser-Kühlkreis angeordnet sind, wodurch der Druck überwacht, bzw. der Schweissvorgang freigegeben wird. Die Druckwerte können auch über die Anzeige 13 angezeigt werden.

Die Überwachung und Regelung eines Drahtvorschubmotors 19 erfolgt ebenfalls durch die Mikroprozessorsteuerung 10, wobei die Drehzahl mit einem z. B. optoelektronischen Drehimpulsgeber 20 erfasst und an die Mikroprozessorsteuerung als Istwert weitergegeben wird.

Die Eingabe der gewünschten Werte für Drahtvorschubgeschwindigkeit, Drahtstärke, Gasart usw. erfolgt ebenfalls über die Eingabetastatur 11, wobei z. B. der Zusammenhang zwischen Schweissspannung einerseits und Drahtvorschubgeschwindigkeit, Drahtstärke und Gasart anderseits als Programm in einem Speicher (z. B. Schreib/-Lesespeicher) der Mikroprozessorsteuerung 10 abgespeichert ist. Dadurch ist es möglich, beliebige Schweisseinstellungen abzuspeichern und bei Bedarf wieder abzurufen (z. B. für Roboterschweissen).

Bei diesem Beispiel ist ein Analogregler 6 zur Ansteuerung des Schaltteils 3 vorgesehen, aber es ist auch möglich, dass die Mikroprozessorsteuerung 10 erweitert wird und an die Stelle des Analogreglers 6 tritt, bzw. dessen Funktion ausübt.

Das Schweissgerät eignet sich vorzüglich für das MIG-MAG, Pulsed-Arc-, WIG- und Handelektroden-Schweissverfahren.

Anstelle der alphanumerischen Anzeige 13 kann nach Bedarf auch ein Datensichtgerät, ein Drucker- oder eine Sprachausgabeeinheit treten.

Durch den Einsatz mehrerer parallelgeschalteter spannungsfester Leistungsschalttransistoren als Schalter in der Schaltstufe 3 können Schweissgeräte von 13 kVA bis 50 kVA Nennleistung hergestellt werden.

Fig. 2 zeigt eine Schaltstufe 3, welche als Eintakt-Durchflusswandler mit asymmetrischer Halbbrückenschaltung bekannt ist. Zwei Schalttransistoren 21, 22 sind über in Serie liegende Dioden 23, 24 parallelgeschaltet und liegen an der vom Netzgleichrichter 2 (Fig. 1) gelieferten Gleichspannung. Die Primärwicklung des Transformators 4 ist zwischen den entsprechenden Verbindungspunkten der Transistoren 21, 22 mit den Dioden 23, 24 angeschlossen. Die Transistoren 21, 22 werden über Treiberstufen 25, 26 gleichzeitig vom Pulsbreitenmodulator 27 ein- und ausgeschaltet, dessen Eingangsanschluss 28 mit dem Ausgang des Analogreglers 6 (Fig. 1) verbunden ist. Der Pulsbreitenmodulator 27 kann beispielsweise einen Sägezahn- oder Dreieckspannungsgenerator enthalten, der über das vom Analogregler gelieferte Fehlersignal über einen Komparator die Impulsbreite der Ströme in den Transistoren 21, 22 bestimmt. Wenn die Transistoren 21, 22 ausgeschaltet sind, so fliesst der von der Primärwicklung des Transformators 4 gelieferte Induktionsstrom über die Dioden 23, 24 ab.

Fig. 3 zeigt eine Schaltstufe 3, welche als Gegentakt-Vollbrücke bekannt ist. Jeweils zwei in Serie liegende Schalttransistoren 29, 30 und 31, 32 sind parallelgeschaltet und liegen an der vom Netzgleichrichter 2 (Fig. 1) gelieferten Gleichspannung. Zu jeder Kollektor-Emitterstrecke der Transistoren 29, 30 und 31, 32 sind Dioden 33, 34 und 35, 36 parallelgeschaltet, welche wie im vorhergehenden Beispiel im ausgeschalteten Zustand der Transistoren den Induktionsstrom der Primärwicklung des Transformators 4 ableiten. Die Primärwicklung des Transformators 4 ist zwischen den entsprechenden Verbindungspunkten der in Serie liegenden Schalttransistoren 29, 30 und 31, 32 angeschlossen. Die Transistoren 29, 32 einerseits, und die Transistoren 30, 31 werden über Treiberstufen 37, 38 und 39, 40 abwechselnd vom Pulsbreitenmodulator 27 ein- und ausgeschaltet, dessen Eingangsanschluss 28 wieder mit dem Ausgang des Analogreglers 6 (Fig. 1) verbunden ist.

Beim Beispiel einer Schaltstufe 3 nach Fig. 2 oder 3 ist es auch möglich, dass ohne Sekundärgleichrichter 5 gearbeitet wird, d. h. dass die Sekundärwicklung direkt mit den Ausgangsanschlüssen 8 und 9 verbunden ist. Für das Schweissen steht dann ein Wechselstrom zur Verfügung, welcher insbesondere für das Argon-arc-, bzw. WIG(TIG)-Schweissen von Aluminium oder Buntmetallen geeignet ist. Die direkte Verbindung kann beispielsweise durch Überbrückung der Sekundärgleichrichter 5 mittels Schalter erfolgen. Wie bereits beim Ausführungsbeispiel nach Fig. 1 erwähnt wurde, kann die gewünschte Ausgangsleistung des Schaltnetzgerätes durch Parallelschaltung mehrerer Schalttransistoren erzielt werden.

In der Einleitung wurde bereits erwähnt, dass die zulässigen Transistorparameter, insbesondere die Sättigungsspannung $U_{CEsat}$ und der maximale Kollektorstrom $I_{Cmax}$ nicht überschritten werden dürfen, um eine Zerstörung der Transistoren zu vermeiden. Beim praktischen Schweissbetrieb treten jedoch ständige Lastschwankungen, sowie dynamische und statische Kurzschlüsse auf, wodurch zwei zueinander konträre Forderungen resultieren:

a) Um einerseits die Transistoren wirkungsvoll zu schützen, ist es notwendig, sie unmittelbar nach dem Auftreten eines Überstroms im Kurzschlussfall abzuschalten, wobei Verzögerungszeiten von ca. 200 bis 300ns zwischen Eintreten des Kurzschlusses und Abschalten des Transistors die obere Grenze sind.

b) um anderseits den während des Schweissvorgangs stattfindenden Kurzschluss durch den kontinuierlichen Vorgang des Tropfenablösens so ablaufen zu lassen, dass befriedigende Schweissergebnisse erzielt werden, benötigt man relativ hohe Kurzschlussströme, bzw. hohe Leistungen.

Um diese beiden Forderungen zu erfüllen, ist erfindungsgemäss eine Schutzschaltung vorgesehen, welche erstens den Sättigungszustand der Transistoren überwacht, zweitens den Kollektorstrom begrenzt, und drittens die Stromanstiegsgeschwindigkeit im Kurzschlussfall begrenzt. Die Schutzschaltung für ein elektronisches Schweissgerät gemäss der Erfindung besteht darin, dass zur Überwachung der Sättigungsspannung der Transistoren erste Komparatoren vorgesehen sind, dass zur Begrenzung des Kollektorstromes der Transistoren zweite Komparatoren vorgesehen sind, wobei die Ausgänge der ersten und zweiten Komparatoren dem Setz-Eingang zweier Kippglieder zugeführt sind, deren Ausgänge gegebenenfalls über Verstärker den Treiberstufen der Transistoren zugeführt sind, um diese beim Auftreten einer zu hohen Sättigungsspannung und/oder eines zu hohen Kollektorstromes abzuschalten, und dass zur Begrenzung der Stromanstiegsgeschwindigkeit der Kollektorströme der Transistoren im Sekundärkreis des Schalttransformators ein zusätzlicher Übertrager vorgesehen ist, dessen Primär- und Sekundärwicklung in Serie liegend, gegensinnig gewickelt sind, so dass durch die Gegenspannung der Sekundärwicklung der Stromanstieg in Abhängigkeit von der Last und damit vom Schweissstrom begrenzt wird.

Bei der in Fig. 4 dargestellten Schutzschaltung bezeichnet 2 den Netzgleichrichter und 3 die Schaltstufe (strichpunktiert). Die Schaltstufe 3 enthält wie beim Beispiel nach Fig. 2 zwei Schalttransistoren 21 und 22, welche an die Primärwicklung des Schalttransformators 4 angeschlossen sind. Es versteht sich wiederum, dass mehrere Schalttransistoren je nach erforderlicher Leistung parallelgeschaltet werden können. Die Schalttransistoren 21 und 22 werden über entsprechende Treiberstufen 25 und 26 angesteuert, welche ihrerseits vom Pulsbreitenmodulator 27 angesteuert werden. Der Eingang des Pulsbreitenmodulators 27 ist mit dem Ausgang des Analogreglers 6 verbunden, welchem die Soll- und Istwertsignale für die Schweissspannung U und dem Schweissstrom I zugeführt werden.

Anschliessend wird die erfindungsgemässe Schutzschaltung erläutert. Im Stromzweig jedes Transistors 21 und 22 ist jeweils ein Stromwandler 41 und 42 vorgesehen, welcher jeweils ein Signal an einen zugehörigen Strom-Komparator 43 und 44 abgibt. Überschreitet dieses Signal einen vorbestimmten einstellbaren Pegel, so tritt am Ausgang des jeweiligen Komparators 43, 44 ein Signal auf, welches jeweils dem Setz-Eingang S eines Kippglieds (RS-Kippglied) 45, 46, zugeführt wird, und dieses beispielsweise in den Ein-Zustand bringt. Dieses Ein-Zustandssignal wird jeweils gegebenenfalls über einen Verstärker 47, 48 der jeweiligen Treiberstufe 25, 26 zugeführt, um diese, und damit auch die Transistoren 21, 22 auszuschalten.

In analoger Weise wird die Kollektor-Emitterspannung der Transistoren 21 und 22 zu Spannungs-Komparatoren 49, 50 geleitet, deren Ausgang wiederum mit dem Setz-Eingang S des jeweiligen Kippglieds 45, 46 verbunden ist, so dass beim Auftreten einer Sättigungsspannung oberhalb eines vorbestimmten einstellbaren Pegels ebenfalls eine Abschaltung der Treiberstufen 25, 26 und der Transistoren 21 und 22 erfolgt, wie oben beschrieben wurde.

Die Rücksetzung der beiden Kippglieder 45 und 46 erfolgt in der Weise, dass am Ende des Kurzschlusses von der jeweiligen Treiberstufe 25, 26 ein Rücksetzsignal zum Rücksetz-Eingang R des jeweiligen Kippglieds 45, 46 geleitet wird. Beispielsweise wird das Rücksetzsignal jeweils von einem in der Treiberstufe vorhandenen Transistor (nicht dargestellt) abgenommen und über ein Widerstand- und Entkopplungsnetzwerk (nicht dargestellt) dem Rücksetz-Eingang R zugeführt. Das Rücksetzsignal führt beispielsweise während der Einschaltdauer der Transistoren 21, 22 positives Potential und ist damit für die Kippstufen 45, 46 unwirksam, während es während der Sperrdauer der Transistoren 21, 22 negatives Potential annimmt und dadurch die Kippstufen 45, 46 rücksetzt.

Gemäss einem weiteren Merkmal der Erfindung ist vorgesehen, dass beim Ansprechen eines der Strom-Komparatoren 43, 44 oder Spannungskomparatoren 49, 50 beide Transistoren 21 und 22 synchron abgeschaltet werden. Dies erfolgt in der Weise, dass z.B. der Ausgang des Kippgliedes 46, gegebenenfalls über einen Verstärker 51, dem Setz-Eingangs S des Kippgliedes 45 zugeführt wird. Desgleichen wird der Ausgang des Kippgliedes 45 gegebenenfalls über einen Verstärker 52, dem Setz-Eingang S des Kippgliedes 46 zugeführt. Durch diese gegenseitige Koppelung der Kippglieder 45, 46 wird erreicht, dass beim Auftreten eines Fehlers beide Transistoren 21 und 22 innerhalb von ca. 200 ns abgeschaltet werden.

Zur Überwachung des Kollektorstromes der Transistoren 21 und 22 würde prinzipiell ein Stromwandler und ein Strom-Komparator genügen, da der Strom des Schalttransformators durch beide Transistoren fliesst. Aus Sicherheitsgründen sind jedoch zwei Stromwandler 41, 42 und zwei Strom-Komparatoren 43, 44 vorgesehen.

Zur Begrenzung der Stromanstiegsgeschwindigkeit $\frac{di}{dt}$ im Kurzschlussfall ist erfindungsgemäss im Sekundärkreis des Schalttransformators 4 ein zusätzlicher Übertrager 53 vorgesehen, dessen Primär- und Sekundärwicklungen in Serie liegend, gegensinnig gewickelt sind. Der Sekundärstrom (Schweissstrom) des Übertragers 53 induziert dadurch in dessen Primärwicklung eine Gegen-EMK, welche umso grösser ist, je grösser die Stromänderung im Lastkreis, d.h. in der Lichtbogenstrecke ist. Dies bedeutet, dass der Stromanstieg $\frac{di}{dt}$ des Schweissstromes umso stärker verringert wird, je stärker der Schweissstrom ist. Diese Stromanstiegsbegrenzung wirkt sich über die induktive Kopplung des Schalttransformators 4 auch auf den Stromanstieg des Kollektorstroms der Transistoren 21 und 22 aus und begrenzt diesen.

In Fig. 5a ist der zeitliche Verlauf des Kollektorstromes $I_C$ bei Normalbetrieb unter Verwendung des Übertragers 53 zur $\frac{di}{dt}$ Begrenzung dargestellt, wobei $t_a$ die Einschaltdauer der Transistoren bezeichnet. Aus der ansteigenden Flanke ist der rasche Stromanstieg bei Normallast erkennbar. In Fig. 5b ist der Kurzschlussfall unter gleichen Bedingungen d.h. mit $\frac{di}{dt}$ - Begrenzung dargestellt, wobei der Abschaltpegel durch den Strom-Komparator bei ca. 110 A liegt. Trotz des Kurzschlusses ist die schraffiert dargestellte Strom-Zeitfläche gross genug, um eine einwandfreie Tropfenablösung zu gewährleisten. Die Fig. 5c

zeigt einen Kurzschlussfall ohne $\frac{di}{dt}$ - Begrenzung.

Es ist ersichtlich, dass die wesentlich geringere Strom-Zeitfläche für eine einwandfreie Tropfenablösung nicht ausreicht, wodurch die Qualität der Schweissung vermindert wird.

Durch die erfindungsgemässe Schutzschaltung werden somit folgende Vorteile erzielt:

1. Durch die Strom- und -Spannungs-Komparatoren wird eine rasche Abschaltung im Kurzschlussfall erzielt.

2. Durch die $\frac{di}{dt}$ - Begrenzung wird der Abschaltpegel wesentlich später erreicht, wodurch genügend Leistung für die Tropfenablösung zur Verfügung steht.

3. Die Stromanstiegsgeschwindigkeit $\frac{di}{dt}$ sinkt mit steigender Belastung.

4. Es werden keine zusätzlichen Verluste verursacht, welche z.B. bei Entlastungsnetzwerken auftreten.

**Patentanspruch**

1. Elektronisches Schweissgerät mit einem primärseitig geregelten Schaltnetzgerät, bei dem an einen Netzgleichrichter (2) ein in Abhängigkeit von dem Lichtbogenstrom und/oder von der Lichtbogenspannung über einen Analogregler (6) gesteuerten Wechselrichter in Form einer Halbleiter-Schaltstufe (3) angeschlossen ist, deren Ausgang über einen Transformator (4) mit einem Schweissgleichrichter (5) verbunden ist, mit zwei elektrischen Messwertaufnehmern (7) für die Lichtbogenspannung und den Lichtbogenstrom, wobei der Sollwerteingang des Analogreglers (6) mit dem Ausgang einer zur Sollwerteinstellung der einen Lichtbogen-Kenngrösse oder der beiden Lichtbogen-Kenngrössen und zur Schweissüberwachung vorgesehenen Mikroprozessorsteuerung (10) verbunden ist und der Analogregler (6) einen Soll-Istwertvergleich ausführt, um in Abhängigkeit davon ein Fehlersignal (28) zu erzeugen, welches einem Pulsbreitenmodulator (27) der Halbleiter-Schaltstufe (3) zugeführt wird, die Transistoren (21, 22; 29–32) als Schalter enthält und als Eintakt-Durchflusswandler mit asymmetrischer Halbbrückenschaltung oder als Gegentakt-Vollbrücke ausgebildet ist, dadurch gekennzeichnet, dass zur Überwachung der Sättigungsspannung der Transistoren (21, 22) erste Komparatoren (49, 50) vorgesehen sind, dass zur Begrenzung des Kollektorstromes der Transistoren (21, 22) zweite Komparatoren (43, 44) vorgesehen sind, wobei die Ausgänge der ersten und der zweiten Komparatoren (49, 50, 43, 44) dem Setz-Eingang (S) zweier Kippglieder (45, 46) zugeführt sind, deren Ausgänge gegebenenfalls über Verstärker (47, 48) den Treiberstufen (25, 26) der Transistoren (21, 22) zugeführt sind, um diese beim Auftreten einer zu hohen Sättigungsspannung oder eines zu hohen Kollektorstromes abzuschalten, und dass zur Begrenzung der Stromanstiegsgeschwindigkeit der Kollektorströme der Transistoren (21, 22) im Sekundärkreis des Transformators (4) ein zusätzlicher Übertrager (53) vorgesehen ist, dessen Primär- und Sekundärwicklung in Serie liegend, gegensinnig gewickelt sind, so dass durch die Gegenspannung der Sekundärwicklung der Stromanstieg in Abhängigkeit von der Last und damit vom Schweissstrom begrenzt wird, wobei vorzugsweise jeweils der Ausgang eines der Kippglieder (45, 46) gegebenenfalls über Verstärker (51, 52) mit dem Setz-Eingang (S) des anderen Kippgliedes (45, 46) verbunden ist, so dass beim Setzen eines Kippgliedes gleichzeitig auch das andere Kippglied gesetzt wird.

**Claim**

1. An electronic welding apparatus including a primary controlled switching mode power supply including a inverter in form of a halfsemiconductor stage (3), said inverter being connected to a power line rectifier (2) and controlled through an analog control circuit (6) in dependence on the arc current and/or to the arc voltage, wherein the output is connected through a transformer (4) with a welding rectifier (5), with two electrical current/voltage converters (7) for the arc voltage and the arc current, the nominal value input of the analog control circuit (6) being connected with the output of a microprocessor control (10) provided for adjusting the nominal value of the one arc-magnitude or of both arc-magnitudes and for watching the welding and the analog control circuit effecting a comparison nominal-actual value, for generating in dependence thereto an error signal (28) which is supplied to a pulse width modulator (27) of the semiconductor-switching stage (3), which comprises transistors (21, 23; 29–32) as switch and being designed as single-ended buck regulator with an asymmetric half-bridge circuit or as push pull full bridge, characterized in that for monitoring the saturation voltage of the transistors (21, 22) are provided comparators (49, 50), that for limiting the collector current of the transistors (21, 22) are provided two comparators (43, 44), the outputs of the first and second comparators (49, 50, 43, 44) are supplied to the set-input (S) of two flip-flops (45, 46), the outputs of which are supplied through amplifiers (47, 48) to driver stages (25, 26) of the transistors (21, 22), for switching them off in an excessively high saturation voltage or an excessively high collector current occur and wherein for delimiting the current rise time of the collector currents of the switching transistors (21, 22) is provided an additional transformer in the secondary circuit of the transformer (4), having a primary and secondary coil arranged in series and coiled in opposite direction so that due to the counter voltage of the secondary coil, the current rise is delimited in dependence on the load and thus on the welding current, and wherein the output of one of said two flip-flops (45, 46) is each connected with the set-input (S) of the other one of said two flip-flops (45, 46), so that, when one of said two flip-flops is set, simultaneously also the other one of said two flip-flops is set.

**Revendication**

Appareil de soudage électronique comportant un appareil de réseau combinatoire réglé côté primaire dans lequel un onduleur se présentant sous forme d'un étage de commutation à semiconducteur (3) et commandé par un régulateur analogique (6) en fonction du courant et/ou de la tension d'arc électrique, est raccordé à un redresseur de réseau (2), la sortie de cet onduleur étant raccordée, via un transformateur (4), à un redresseur de soudage (5), deux capteurs électriques de valeur de mesure (7) étant prévus pour la tension et le courant d'arc électrique, l'entrée de valeur de consigne du régulateur analogique (6) étant raccordée à la sortie d'une commande à microprocesseur (10) prévue pour le réglage de la valeur de consigne d'une ou des deux grandeurs caractéristiques d'arc électrique, de même que pour le contrôle du soudage, tandis que le régulateur analogique (6) exécute une comparaison valeur de consigne/valeur effective afin d'engendrer, en fonction de celle-ci, un signal d'erreur (28) qui est acheminé à un modulateur d'impulsions en durée (27) de l'étage de commutation à semi-conducteur (3) comprenant des transistors (21, 22, 29–32) comme commutateurs et réalisé sous forme d'un convertisseur de débit à une alternance avec un montage en demi-pont asymétrique ou sous forme d'un pont intégral symétrique, caractérisé en ce que, pour contrôler la tension de saturation des transistors (21, 22), on prévoit des premiers comparateurs (49, 50); pour limiter le courant des collecteurs des transistors (21, 22), on prévoit des seconds comparateurs (43, 44), les sorties des premiers et des seconds comparateurs (49, 50, 43, 44) étant acheminées à l'entrée de positionnement (S) de deux basculeurs (45, 46) dont les sorties sont acheminées, éventuellement via des amplificateurs (47, 48), aux étages excitateurs (25, 26) des transistors (21, 22) afin de mettre ces derniers hors circuit lors de l'apparition d'une tension de saturation trop élevée ou d'un courant trop élevé aux collecteurs tandis que, pour limiter la vitesse d'accroissement des courants aux collecteurs des transistors (21, 22), on prévoit, dans le circuit secondaire du transformateur (4), un transformateur supplémentaire (53) dont l'enroulement primaire et l'enroulement secondaire en série sont enroulés dans des sens opposés de telle sorte que, grâce à la contretension de l'enroulement secondaire, l'accroissement de courant soit limité en fonction de la charge et, partant, du courant de soudage et, de préférence, la sortie d'un des basculeurs (45, 46) est raccordée, éventuellement via des amplificateurs (51, 52), à l'entrée de positionnement (S) de l'autre basculeur (45, 46) de telle sorte que, lors du positionnement d'un basculeur, l'autre basculeur soit en même temps également positionné.

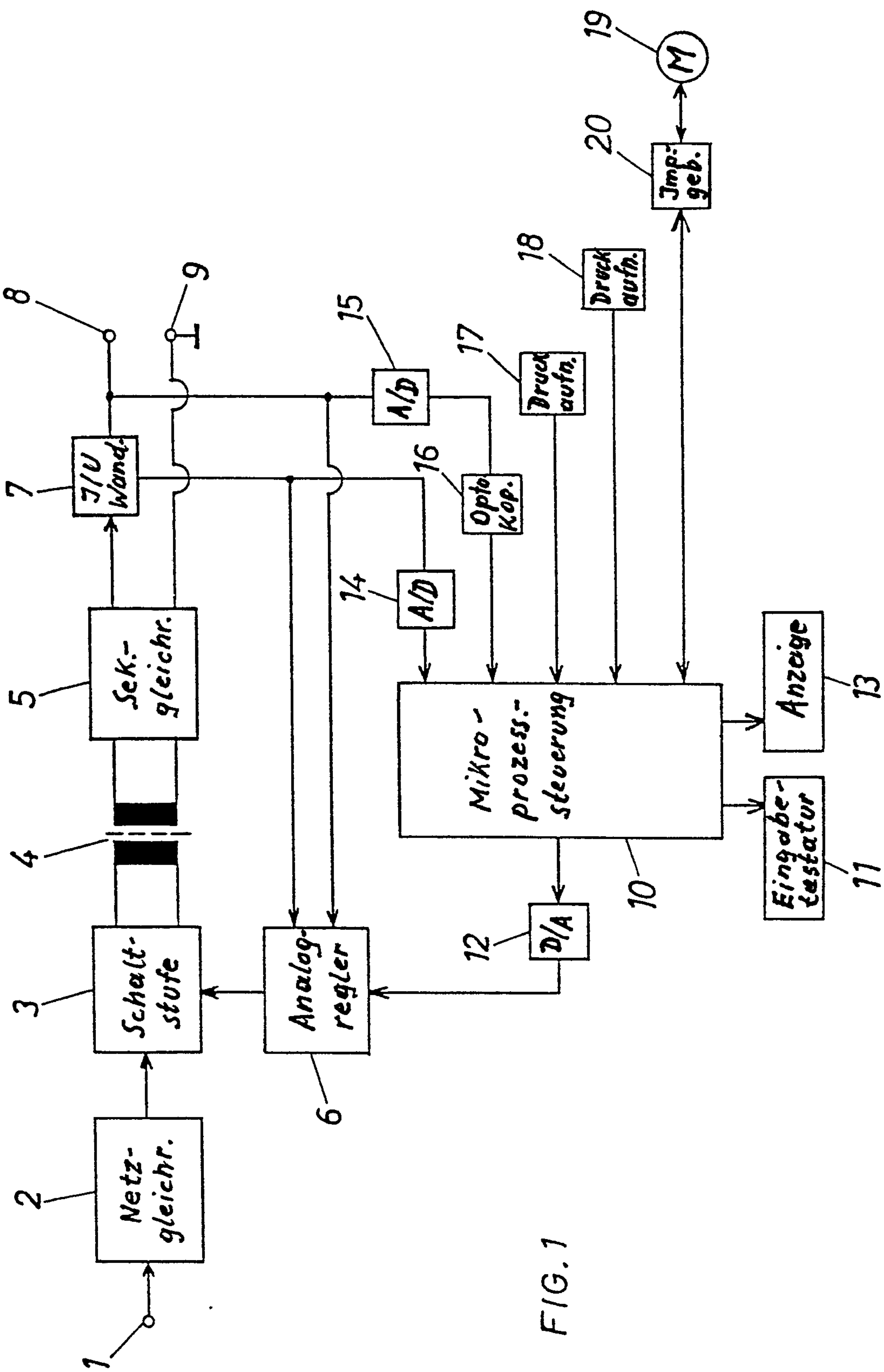
1
2
Netz-
gleichr.
3
Schalt-
stufe
4
5
Sek.-
gleichr.
7
J/U
Wand.
8
9
6
Analog-
regler
15
A/D
16
Opto
Kop.
14
A/D
17
Druck
aufn.
18
Druck
aufn.
20
Imp.
geb.
19
M
Mikro-
prozess-
steuerung
10
12
D/A
Anzeige
13
Eingabe-
tastatur
11

FIG. 1

FIG. 2

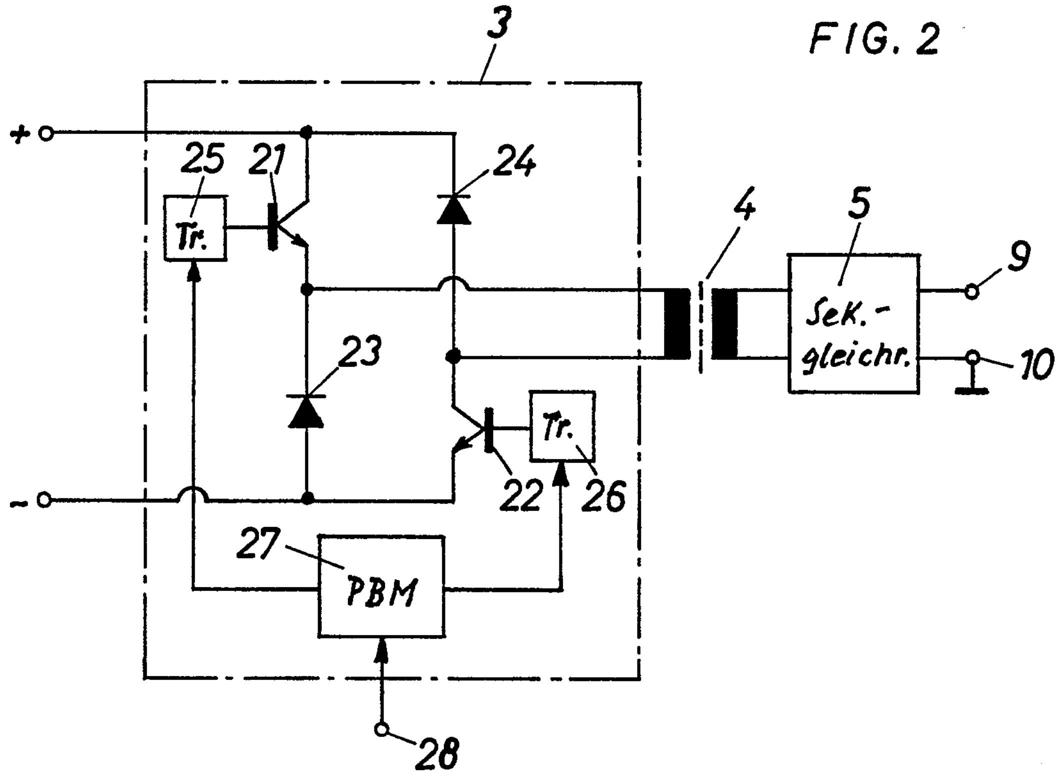
3
25
21
24
Tr.
4
5
9
Sek.-
gleichr.
10
23
Tr.
22
26
27
PBM
28

FIG. 3

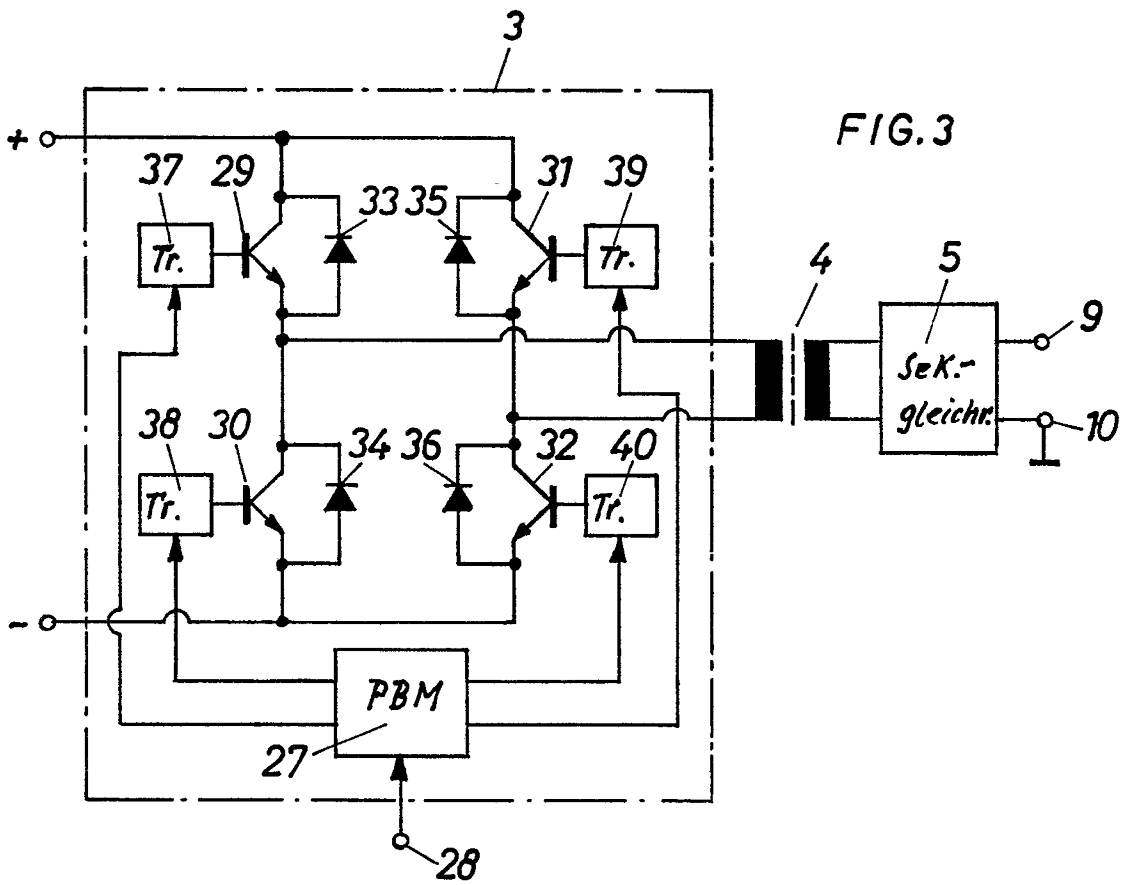
3
37
29
33
35
31
39
Tr.
Tr.
4
5
9
Sek.-
gleichr.
10
38
30
34
36
32
40
Tr.
Tr.
PBM
27
28

FIG. 4

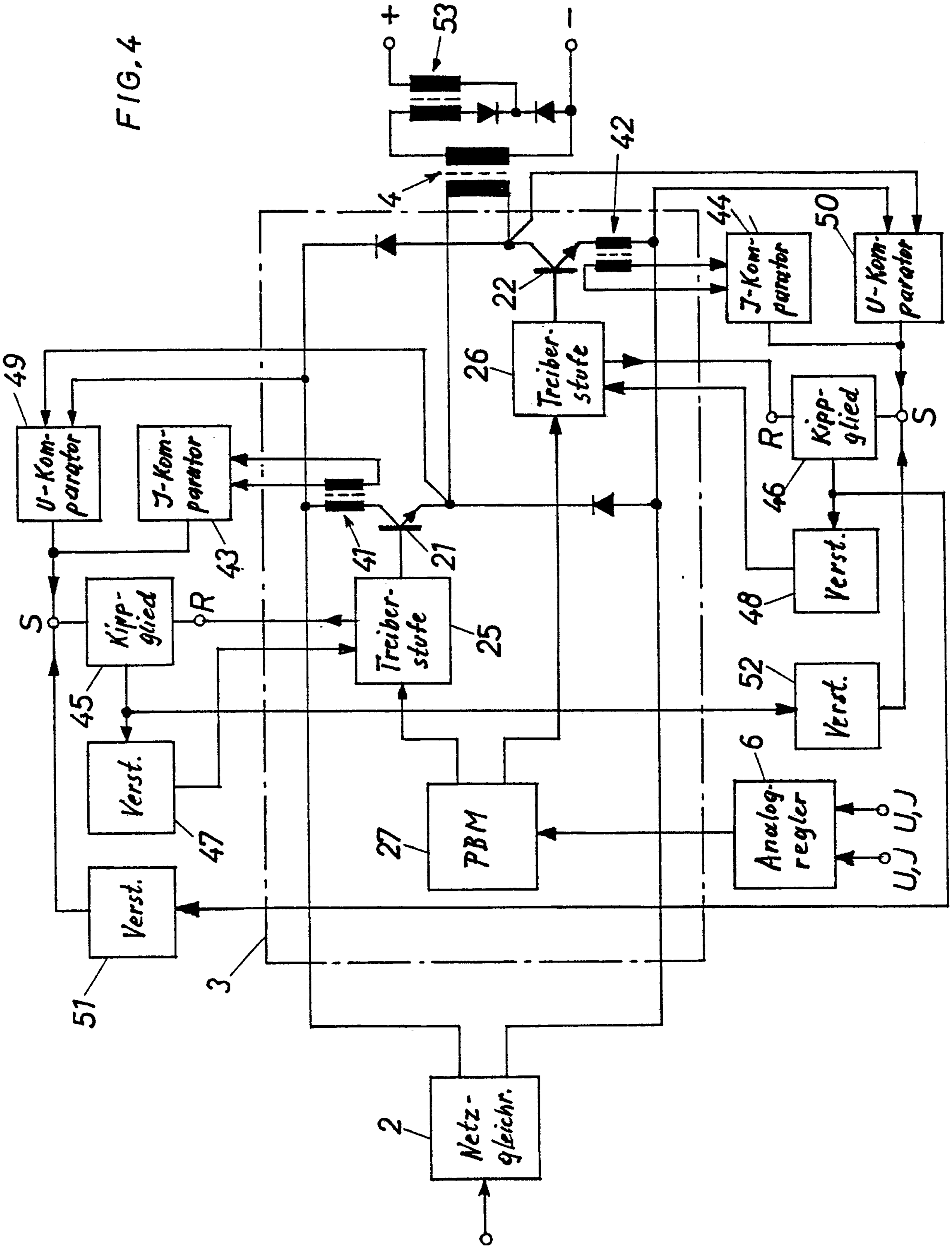

53
+
-
42
4
44
50
22
J-Komparator
U-Komparator
26
Treiberstufe
Kippglied
R
S
46
49
U-Komparator
J-Komparator
43
41
21
Verst.
48
S
Kippglied
R
Treiberstufe
25
45
52
Verst.
6
Verst.
47
27
PBM
Analogregler
U,J
U,J
Verst.
51
3
2
Netzgleichr.

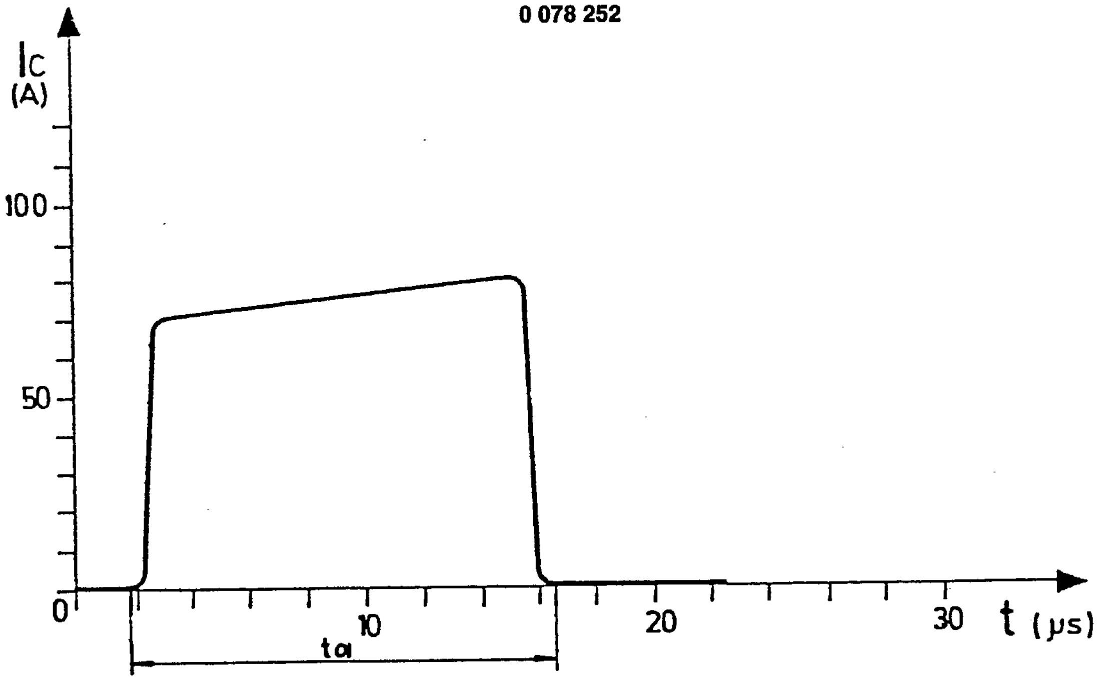
Ic
(A)
100
50
0
10
20
30
t (µs)
ta

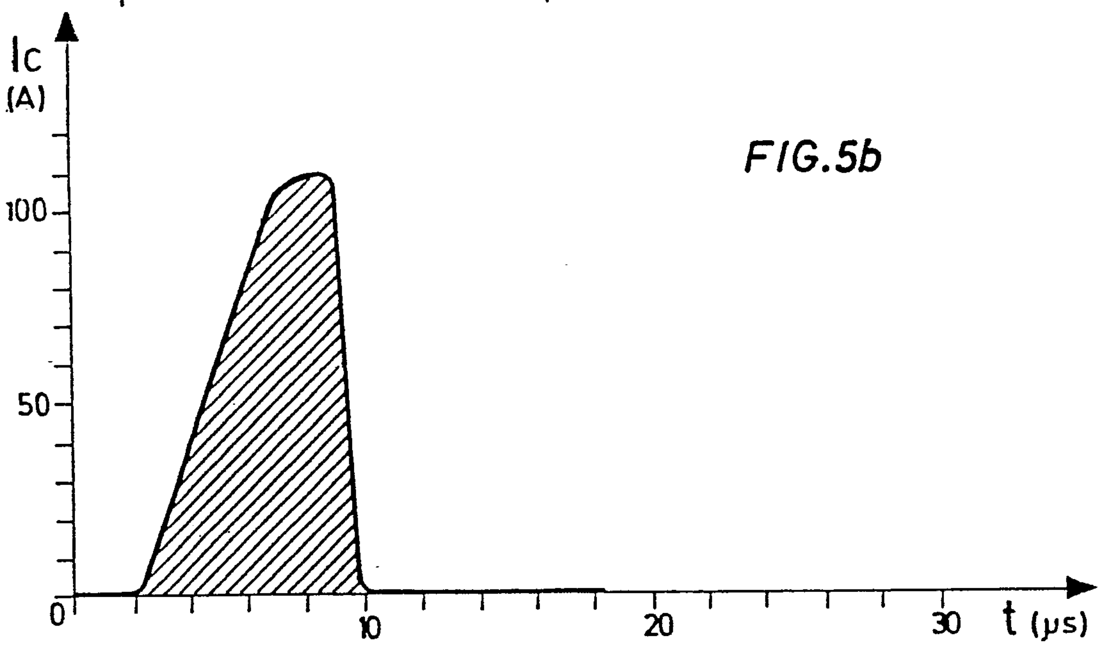
Ic
(A)
100
50
0
10
20
30
t (µs)

FIG.5b

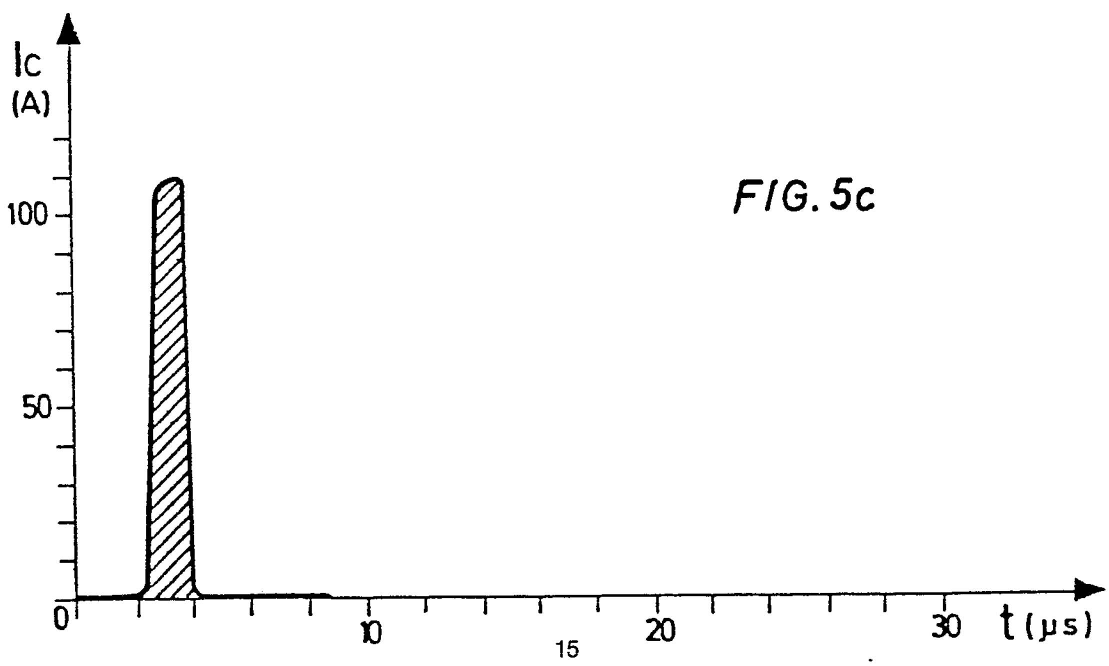
Ic
(A)
100
50
0
10
20
30
t (µs)

FIG.5c